Europäisches Patentamt

European Patent Office

Office européen des brevets

(11) Publication number: **0 387 046
A2**

# EUROPEAN PATENT APPLICATION

(21) Application number: **90302455.2**

(22) Date of filing: **07.02.90**

(51) Int. Cl.⁵: **G07F 7/02**

(30) Priority: **07.03.89 JP 54675/89**

(43) Date of publication of application:
**12.09.90 Bulletin 90/37**

(84) Designated Contracting States:
**DE FR GB IT**

(71) Applicant: **MATERIAL ENGINEERING
TECHNOLOGY LABORATORY, INC.**
**21-13, Ohhara 2-chome
Setagaya-ku, Tokyo 156(JP)**

Applicant: **DAC INC.**
**27-15 Ohji 1-chome
Kita-ku, Tokyo(JP)**

Applicant: **NIHON CARD TRANSFER CORP.**
**3rd Floor, Kohjimachi Sukuea Bldg., 3
Kohjimachi 3-chome
Chiyoda-ku, Tokyo(JP)**

(72) Inventor: **Isono, Keinosuke**
**46-112 Ohaza-Angyoutouhachi
Kawaguchi-shi, Saitama-ken(JP)**

(74) Representative: **Hughes, Brian Patrick et al
Graham Watt & Co. Riverhead
Sevenoaks, Kent TN13 2BN(GB)**

(54) Communication system employing prepaid card.

(57) A communication system enables users to purchase various articles of merchandise and services such as data supply services, and to get refunds through communication lines such as telephone lines and prepaid cards. The communication system comprises a prepaid card 1, a communication terminal 2, and a host computer. The prepaid card has its own identification data. The communication terminal reads data stored in the prepaid card, and when the user enters necessary data into the communication terminal, a communication starting command is produced, enabling the communication terminal to transmit data to the host computer over the communication line. The host computer processes the transmitted data, instructs the communication terminal to rewrite data stored in the prepaid card, instructs the delivery of a purchased article, and/or gives the user any of various data services.

**F I G.2**

## COMMUNICATION SYSTEM EMPLOYING PREPAID CARD

### BACKGROUND OF THE INVENTION

The present invention relates to a system in which users can purchase various articles of merchandise and services such as data supply services, and to get refunds through communication lines such as telephone lines.

Heretofore, certain articles of merchandise could be purchased by telephone. In such a system, an article can be ordered or purchased by way of a telephonic conversation between the purchaser and the seller. The telephonic order system is very convenient in that the buyer can easily purchase a desired article at home without going to the place where it is sold. However, from the standpoint of the seller, each purchase made through this system is subject to various possible dangers. In particular, the use of telephones to place bets for various races such as horse races, bicycle races, speedboat races, motrocycle races, or the like is highly likely to cause various problems as to business transactions that have been made by telephone. For example, a horse race will be described as a possible source of problems. No problem will arise if the horse on which a bet has been placed wins. If the horse loses, then the money for the bet will have to be paid by the purchaser. In this case, however, it is often very difficult at a later time to give a reliable showing of the telephonic transaction between the better and the seller, and, even if the transaction can be proved, a tedious and time-consuming process is required to establish reliable evidence. In gambling such as horse racing, there may be instances where a person who has placed a bet is not solvent. For these reasons, the placing of bets by telephone for gambling is not actually in general practice although the system itself is convenient for potential users.

However, bets for horse races can presently be placed by telephone according to the following limited system: A potential buyer joins the telephonic betting system run by the Japan Racing Association and provides security for the payment of the bets. Then, the subscriber can place bets within the amount of money represented by the security. With this system, the seller avoids any potential risks. There are two ways of placing bets by telephone. More specifically, the two ways are the same up to the point where a potential better enters into a telephonic betting system agreement with the Japan Racing Association, and gives security. Then, bets can be placed in two different methods. According to one method, the better enters a bet directly into a computer in a telephonic betting office through a pushbutton dialing telephone (ARS system). According to the other method, the better places bets through a conversation with a person in a telephonic betting office through either a pushbutton dialing telephone or a rotary dialing telephone (CRT system).

Since many bets for a horse race tends to be placed immediately before the horse race starts, the above two methods or systems have the following problems: According to the ARS system, the subscriber's telephone is first connected to the computer at the telephonic betting office, and then the subscriber enters his bet in the form of numerical coded data by means of the ten-key pad of the telephone, directly into the computer. The entered data are repeated by an audio response unit. If the repeated data are correct, then the subscriber operates the ten-key pad to send a confirmation signal which completes the place of the bets. The ARS system however suffers many drawbacks. Bets made by betters are liable to contain mistakes or errors, and it is time-consuming to enter necessary numerical data by telephone. Inasmuch as numerical data are entered through the ten-key pad after the telephone line has been connected to the computer, the telephone line may be occupied by one better for a long period of time. For the audio response unit to send a voice message for confirmation, it is necessary to switch from a signal modem to an audio modem, and a certain time is needed to effect this switching process. The "audio modem" means a device for recognizing or generating voice signals, and the "signal modem" means a device for recognizing or generating communication signals. Since the bet is confirmed by the voice signal from the audio response unit, the better tends to misunderstand or miss the voice message and requires a certain time until the entire voice message is heard.

According to the CRT system, because the better place bets through a direct telephonic oral communication with a person in the telephonic betting office, various problems such as misunderstandings, recognition failures, errors in entering the data into the computer in the betting office, and slips of memory on the part of the better. The time required to place the bet depends on the characters of the better and the person in the telephonic betting office. The telephone lines available for the place of bets may not be used effectively by many people. When many bets come in in a short period of time, every telephone line in the telephonic betting office must be attended. Therefore, when there is no horse racing or when few bets are placed, there may be too many in the office.

With the above two telephonic betting systems, therefore, there are certain limitations on the available telephone lines and personnel in the telephonic betting office, and hence many betters cannot be handled equally without problems. Any problems caused at the time of betting may lead to other problems at the time of subsequent payment.

Recently, prepaid cards such as telephone cards, Japan Railway Group cards, or the like are finding wide use for the purchase of goods, services, and admission tickets. The use of prepaid cards is quite advantageous in that users of prepaid cards are not required to carry a lot of small change and may sell prepaid cards at a premium, and companies which issue prepaid cards are paid in advance. Nevertheless, the kinds of goods and services that can be purchased with prepaid cards and the places where prepaid cards can be used are still limited. Bascially, the purchase of goods and services with prepaid cards is the same as the purchase of them with cash insofar as prepaid cards can be used instead of cash in places where they can be used to buy goods and services.

## SUMMARY OF THE INVENTION

It is an object of the present invention to provide a communication system employing a prepaid card which allows users to purchase articles of merchandise, various admission tickets, bets such as horse race bets, reservation tickets such as airline tickets, and the like, reliably and easily in a short period of time through communication lines with prepaid cards.

According to the present invention, the above object can be achieved by a communication system comprising a prepaid card having a storage area for storing various data and inherent identification data including at least unalterable data, a communication terminal for reading data from and writing data in said prepaid card, entering necessary data after having read data from the prepaid card, and sending the read data and/or necessary data through a communication line in response to a communication starting command and a host computer for performing a necessary procedure in response to the communication from said communication terminal over the communication line.

The communication system thus arranged permits the user of the prepaid card to purchase goods and/or services reliably, easily, and timely in a short period of time without visiting the places where the desired goods and/or services are available. The seller does not have to collect the payment at a later time as the payment has already been made by the prepaid card. Since the user cannot buy goods and/or services beyond his solvency, the seller is free from the danger of uncollected payment.

The above and other objects, features and advantages of the present invention will become more apparent from the following description when taken in conjunction with the accompanying drawings in which a preferred embodiment of the present invention is shown by way of illustrative example.

## BRIEF DESCRIPTION OF THE DRAWINGS

FIG. 1 is a flowchart of a sequence of placing a horse race bet using a communication system according to an embodiment of the present invention;

FIG. 2 is a perspective view of a communication terminal employed in the communication system; and

FIG. 3 is a flowchart of a sequence of refunding money using a refunding machine.

## DETAILED DESCRIPTION OF THE PREFERRED EMBODIMENTS

A communication system according to the present invention, which employs a telephone line as a communication line and a magnetic card as a prepaid card for the placing of horse race bets, will first be described below.

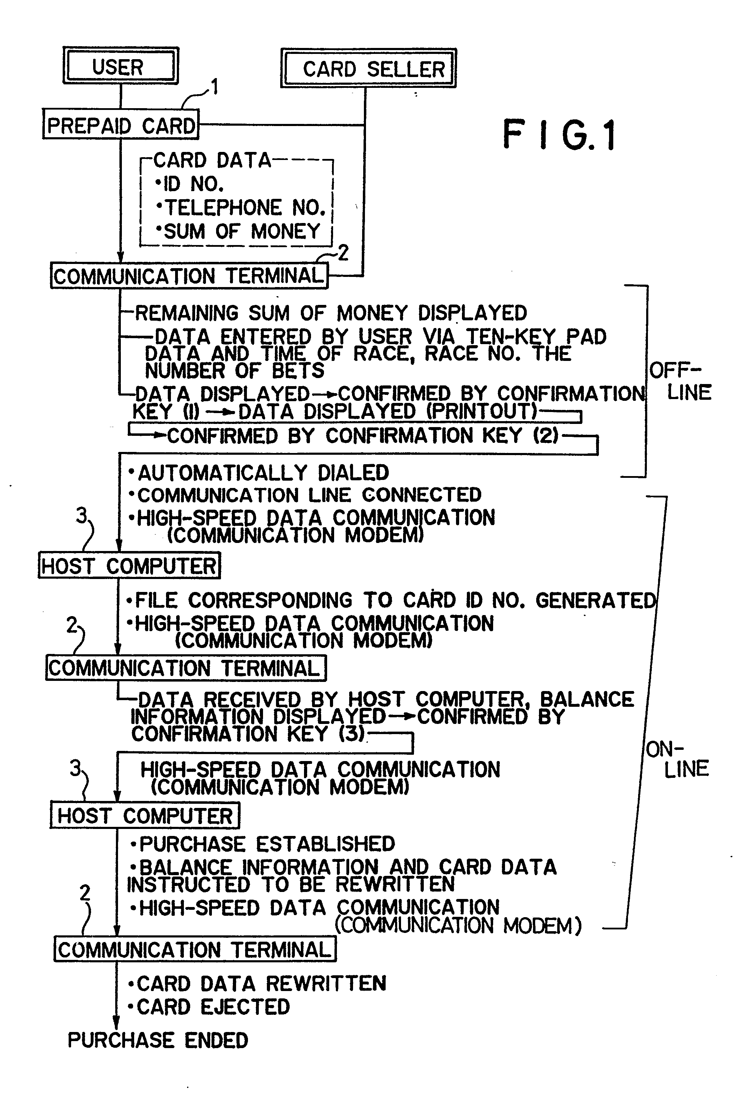

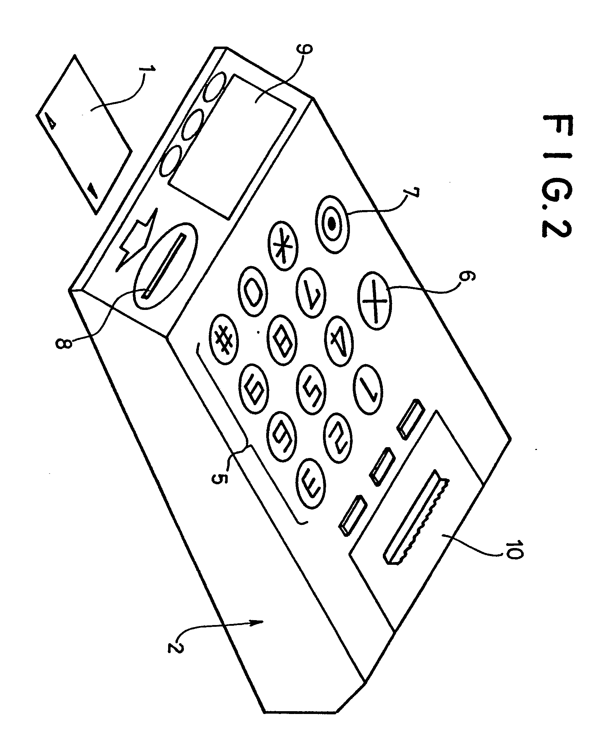

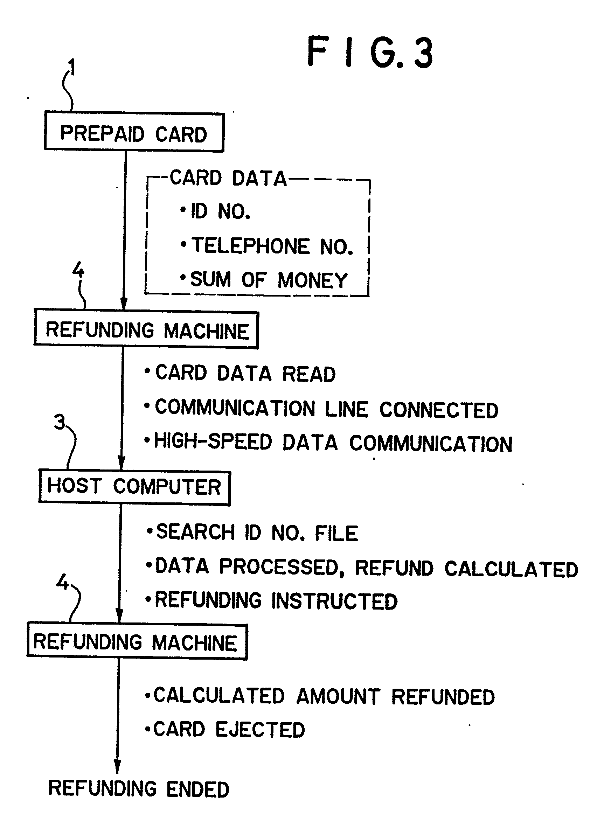

As shown in FIG. 2, the communication system includes a magnetic card 1 which contains data indicating the sum of money paid to buy the card 1, unalterable data indicating two telephone numbers for automatic dialing and an identification (ID) number for identifying the card 1, and a program for operating a communication terminal 2. The communication system also has a communication terminal 2 which is operable in response to insertion of the card 1 into a slot 8. The communication terminal 2 can read the data stored in the card 1 and also rewrite the sum of money represented by the card 1. The communication terminal 2 has a keyboard including a ten-key pad 5 for entering data to be transmitted, a memory (not shown) for storing the data read from the card 1 and the data entered through the ten-key pad 5, a display screen 9 for displaying the entered data or the like, a printer 10 for recording data, an automatic dialing unit (not shown) for automatically connecting a telephone line to one of the telephone numbers stored in the card 1, and a communication unit (not shown) for sending and receiving necessary data over the telephone line. The communication system further includes a host computer 3 (FIG. 1) which is connected to the communication terminal 2 through the telephone line and processes the data sent from the communication terminal 2, and a refunding machine 4 (FIG. 3) connected to the host computer 3. The refunding machine 4 operates, in response to insertion of the magnetic card 1 thereinto, to refund the sum of money indicated by the host computer 3 based on the ID number stored in the card 1.

FIG. 1 shows a sequence of placing a horse race bet in the communication system of the invention.

The user buys a card 1 for placing horse race bets, at a suitable outlet. The user also buys a communication terminal 2 and connects it to his telephone, or buys a telephone equipped with a communication terminal 2. The communication terminal 2 may be connected directly to the telephone line. To place a bet, the card 1 is inserted into the slot 8 of the communication terminal 2. One of the two telephone numbers stored in the card 1 is used to place bets, whereas the other telephone number is used to obtain other services than the placing of bets. These telephone numerals are automatically selected, one at a time, when the card 1 is oriented one way or the other way around. If the user uses the card 1 at home, then the user has to install the communication terminal 2 at home. However, the user may use the card 1 in a place where a telephone equipped with a communication terminal 2 is installed.

In response to insertion of the card 1, the communication terminal 2 reads and stores the data recorded in the card 1, i.e., the sum of money paid to buy the card 1, the program for operating the communication terminal 2, and the ID number of the card 1, in the memory of the communication terminal 2. After the data have been read from the card 1, the communication terminal 2 starts operating according to the program. First, the communication terminal 2 displays the amount of money on the display screen 9. Rather than being read from the card 1, the program for operating the communication terminal 2 may be stored in advance in the communication terminal 2, and may start operating the communication terminal 2 based on the ID number of the card 1 or the telephone numbers stored in the card 1. At the time the communication terminal 2 starts to operate, it is not yet connected to the telephone line.

Then, based on a horse race journal carrying race data such as the racing program, obtained at the time of purchasing the card 1, the user enters various data such as the place and data of the race, the number of the race, the betting method, the horse number, and the number of bets to be placed, through the ten-key pad 5 of the communication terminal 2. The data thus entered are displayed on the display screen 9. The user may use a communication terminal without any display screen. In such a case, the entered data are printed by the printer 10. If some entered data are to be corrected, then the user pushes a correction key 6 to erase the data, and thereafter enters new data. After the data have been entered, the user pushes a confirmation key 7 (first confirmation), and the data are printed by the printer 10. If the printed data are confirmed, then the user pushes the confirmation key 7 again (second confirmation). If any error is to be corrected or entered data altered before the confirmation key 7 is pushed a second time, then the user pushes the correction key 6 and new data can be entered. If the purchase of a betting ticket is to be interrupted, then the user pushes the correction key 6 twice, whereupon the card 1 is ejected from the communication terminal 2, and the purchase sequence is brought to an end.

After the confirmation key 7 has been pressed twice, the communication terminal 2 is connected to the host computer 3 through the telephone line by the automatic dialing unit. Then, the data entered in the communication terminal 2, such as the ID number, the sum of money, and those data entered through the ten-key pad 5 are transmitted to the host computer 3. The host computer 3 generates a file based on the ID number of the card 1, and stores the received data in the file. The file may have been generated in advance of the use of the card 1, e.g., when the card 1 was issued. Then, the host computer 3 sends back the received data and balance information to the communication terminal 2, in which they are displayed on the display screen 9 or printed by the printer 10.

The user then checks the entered data and the data and balance information which are received from the host computer 3, and, if there is no problem, presses the confirmation key 7 within a predetermined period of time (third confirmation). Upon the third confrimation, the placing of bets is established, and the host computer 3 instructs the communication terminal 2 to rewrite data stored in the card 1. The communication terminal 2 substracts the sum of money spent to place the bet from the sum of money stored in the card 1, and then ejects the card 1. If the confirmation key 7 is not pushed a third time in the predetermined period of time, then the host computer 3 determines that the purchase is interrupted, erases the entered data, does not produce any balance information, and disconnects the telephone line, whereupon the communication terminal 2 discharges the card 1. Thereafter, bets can be placed using the card 1. Each time data are sent from the communication terminal 2, the host computer 3 stores the data in the file, searches for the data, checks the data, produces balance information, and effects other data processing, based on the ID number of the card. The data stored in the card 1 while it is in use are preferably rewritten by the communication terminal 2 according to an instruction sent from the host computer 3 over the communication line. If the data stored in the card 1 could be rewritten solely by the communication terminal 2, then some mistakes or problems would be likely to happen.

Data may be entered into the communication terminal 2 through a keyboard including alphabetical keys as well as a ten-key pad, which is normally used to enter data into computers. Since use of such a keyboard is relatively tedious and time-consuming, it is preferable to employ a ten-key pad for data entry so that the communication system of the invention can be handled with ease by ordinary people. Data entry into the communication terminal through speech is also preferable if technical problems such as transformation reliability and economic problems such as cost can be solved.

When a bet is to be placed through the communication system, since various data such as the race number and the number of tickets to be bought are entered into the communication terminal 2 for confirmation before the telephone line is connected, any misunderstanding or error which would otherwise occur if a telephonic conversation were relied upon is eliminated. The communication terminal 2 is connected to the host computer 3 through the telephone line only after the data have been confirmed and the confirmation key has been pushed to execute a communication starting command, after which only the confirmed data are exchanged between the communication terminal 2 and the host computer 3 through the telephone line. Accordingly, any audio modem which is used in existing communication systems using telephones is no longer required, and the data can be exchanged at high speed through a signal modem, used as a communication modem, which signal modem is capable of high-speed data transmission. The "communication modem" means a device for transmitting necessary data.

With the above arrangement, the time required to use a telephone line for one purchase is greatly reduced, and many potential betters are given an equal chance to place bets. The number of telephone lines required is also reduced. No telephone operator is needed as data exchanges are effected only between the terminals and the host computer.

Any bets which have been placed can be canceled before the horse race begins. More specifically, the card 1 oriented for the placing of bets is inserted into the slot 8 of the communication terminal 2 to start operating the communication terminal 2, and thereafter the correction key 6 is pushed for the system to enter a purchase cancel mode. At this time, the communication terminal 2 is not yet connected to the telephone line. If the purchase cancel mode is to be stopped at this time, the correction key 6 is depressed once more, allowing the card 1 to be ejected. After the purchase cancel mode has started, the data with respect to the previously placed bet, i.e., the place and date of the race, the number of the race, the betting method, the horse number, and the number of betting tickets purchased, are entered through the ten-key pad 5 of the communication terminal 2. The data thus entered are displayed on the display screen 9. If some of the data are to be corrected, the correction key 6 is pushed to erase the data, and then new data may be entered. After the data have been entered, the user pushed the confirmation key 7 (first confirmation), and the data are printed by the printer 10. If it is found that the printed data are the same as the data of the previously purchased betting ticket, then the user pushes the confirmation key 7 again (second confirmation). The communication terminal 2 is now connected to the host computer 3 through the telephone line by the autoamtic dialing unit. Then, the data entered in the communication terminal 2, such as the ID number, the sum of money, and those data entered through the ten-key pad 5 are transmitted to the host computer 3. The host computer 3 checks whether there has been a corresponding purchase based on the transmitted ID number. If this corresponding purchase exists, then the host computer 3 sends back the received data, balance information, and cancel information to the communication terminal 2, in which they are displayed on the display screen 9 or printed by the printer 10.

The user then checks the entered data and the data, balance information, and cancel information which are received from the host computer 3, and, if there is no problem, presses the confirmation key 7 within a predetermined period of time (third confirmation). Upon the third confirmation, the purchased betting ticket is canceled, and the refund is added back to the sum of money stored in the card 1. Then, the telephone line is disconnected, and the card 1 is ejected from the communication terminal 2. The purchase cancel mode is now finished. If the confirmation key 7 is not pushed a third time in the predetermined period of time, then the host computer 3 determines that the purchase cancel mode is to be canceled, erases the data entered in the purchase cancel mode, does not produce any balance information, and disconnects the telephone line, whereupon the communication terminal 2 discharges the card 1. Since the previously placed bet or bets can easily be canceled in the above manner, the user can take appropriate action under the circumstances after the previous purchase.

When the card 1 is inserted th other way around into the communication terminal 2, the user can receive various horse race information services other than the placing of bets, such as services which give the odds for a race to be held on a certain day at a certain time, the conditions of the horses entered in a race, the results of a race, information as to whether the horse on which a bet was placed has won, and information as to the amount of money to be refunded on that bet. More specifically, upon insertion of the card 1, the communication terminal 2 starts operating in a service mode, and the user enters a code corresponding to the item of a particular service to be received, through the ten-key pad 5. The entered code is displayed on the display screen 9. If the entered code is to be corrected, the correction key 6 is depressed to erase the code, and a new code can be entered again. After the code has been entered, the user pushes the confirmation key 7, and the communication terminal 2 is now connected to an information service section of the host computer 3 through the telephone line by the autoamtic dialing unit. Then, the particular service item requested is sent from the communication terminal 2 to the host computer 3. The host computer 3 then sends information with respect to the requested service item to the communication terminal 2, where the information is displayed on the display screen 9 or printed by the printer 10. When no particular service item is entered and the confirmation key 7 is pushed, pieces of information with respect to service items preset in the host computer 3 are successively sent to the communication terminal 2, where they are displayed or printed. If the service mode is to be canceled, the correction key 6 is depressed, whereupon the telephone line is disconnected and the card 1 is ejected. The host computer 3 operable in the service mode may be another computer which is connected through a communication line to the host computer which was used at the time of placing the bet.

Any bet on a horse which has won in a race can be refunded by an automatic refunding device of the refunding machine 4, at a refunding counter, or by an appointed banking organization. In each case, the prepaid card 1 used to place the bet is used. FIG. 3 shows a refunding sequence executed by the refunding machine 4. when the card 1 is inserted into the refunding machine 4, the ID number of the card 1 is transmitted from the refunding machine 4 to the host computer 3 which is connected thereto by a communication line. Based on the transmitted ID number, the host computer 3 inspects the data stored in the file for the card 1, calculates the sum of money to be refunded, and instructs the refunding machine 4 to refund the money.

The communication system of the invention resides in that the prepaid card 1 stores the ID number indicative of the card 1. If a prepaid card storing no ID number were used, it could not be identified, and when the placing of a bet is to be canceled or a refund is to be made, the communication system could not identify a card for which the purchase is to be canceled or a refund is to be made. Therefore, the communication system would not be effective unless a prepaid card with an ID number were employed.

The communication system of the invention can be higher in communication speed if a new high-speed communication network is installed in combination with the communication system. If the existing telephone network is employed, any investment required for equipment is small since the communication system can be established simply by connecting communication terminals to existing telephones which are in widespread use.

Data may be recorded in the card electrically, optically, chemically, and magnetically. From the standpoint of the cost of manufacturing cards, magnetic cards are preferable. For greater storage capacity, however, IC cards which store data electrically or optical cards which store data optically are more preferable.

A communication system according to a second embodiment of the present invention, which is used as a system for purchasing articles of merchandise, will be described below. According to this communication system, a user buys a prepaid card equivalent to a certain sum of money for purchasing an article, at a suitable outlet. At this time, the user registers his name and address. These data are stored in the card. These data can be written only once and cannot be altered. The card contains stored data representing its ID number, telephone numbers that can automatically be dialed, the sum of money, and other data.

In use, the prepaid card thus purchased is inserted into a communication terminal. The communication terminal now starts to operate, and displays the remaining sum of money on the display screen. At this time, the communication terminal is not yet connected to the telephone line. Thereafter, based on information contained in a shopping catalog, the user enters data representing the classification number of a desired article, the number of articles to be purchased, and the price of the article, through the ten-key pad of the communication terminal. At the same time, the numerals indicative of these data are displayed on the display screen. If some of the data are to be corrected, the correction key is pushed to erase the data, and then new data may be entered.

After the data have been entered, the user pushes the confirmation key (first confirmation), and the data are printed by the printer. If it is found that the printed data are the same as the entered data, then the user pushes the confirmation key 7 again (second confirmation). The communication terminal is now connected to the host computer through the telephone line by the automatic dialing unit.

Then, the data entered in the communication terminal 2, and the data stored in the card, such as the name and address of the purchaser, the ID number of the card, and the remaining sum of money, are transmitted to the host computer. The host computer sends back the received data, balance information, and date of delivery to the communication terminal, in which they are displayed on the display screen or printed by the printer.

The user then checks the entered data and the data, balance information, and date of delivery which are received from the host computer, and, if there is no problem, presses the confirmation key within a predetermined period of time (third confirmation). Upon the third confirmation, the amount of money required by the purchase is subtracted from the remaining sum of money recorded in the card, and the purchase is completed. If the confirmation key is not pushed a third time in the predetermined period of time, then the host computer determines that the purchase is canceled, erases the entered data, does not produce any balance information, and disconnects the telephone line, whereupon the communication terminal discharges the card. If the date of delivery cannot be accepted, then user pushes the correction key before the third confirmation, whereupon the system enters a date change mode in which dates avaialble for delivery in a certain period are displayed. Then, the user selects a date that is convenient for him, enters the date, and pushes the confirmation key. The host computer again sends back the entered data, balance information, and new date of delivery to the communication terminal, where they are dislayed or printed. Subsequently, the process after the third confirmation is followed to finish the purchase offer. In the above second embodiment, the use of a prepaid card at home is assumed. However, the prepaid card can be used with an external communication terminal in a location where various articles are displayed for sale, so that desired articles can be purchased with the card. The seller of the articles takes suitable action to deliver the requested article based on the data on the purchaser and the purchase which are stored in the host computer.

The purchase of any article which has been offered can be canceled as follows: The prepaid card is inserted into the communication terminal. After the communication terminal starts to operate, the correction key is pushed for the system to enter a purchase cancel mode. At this time, the communication terminal is not yet connected to the telephone line. If the purchase cancel mode is to be stopped at this time, the correction key is depressed once more, allowing the card to be ejected. After the purchase cancel mode has started, the data with respect to the previously purchased article, i.e., the classification number thereof, the number of articles to be purchased, and the price thereof, are entered through the ten-key pad of the communication terminal. The numerical data thus entered are displayed on the display screen. If some of the data are to be corrected, the correction key is pushed to erase the data, and then new data may be entered.

After the data have been entered, the user pushes the confirmation key (first confirmation), and the data are printed by the printer. If it is found that the printed data are the same as the data of the previously purchased article, then the user pushes the confirmation key again (second confirmation). The communication terminal is now connected to the host computer through the telephone line by the automatic dialing unit. Then, the data entered in the communication terminal, and the data recorded in the card, such as the name and address of the purchaser, the ID number of the card, and the remaining sum of money, are transmitted to the host computer. The host computer checks whether there has been a corresponding purchase based on the transmitted ID number. If this corresponding purchase exists, then the host computer sends back the received data, balance information, and cancel information to the communication terminal, in which they are displayed on the display screen or printed by the printer.

The user then checks the entered data and the data, balance information, and cancel information which are received from the host computer, and, if there is no problem, presses the confirmation key within a predetermined period of time (third confirmation). Upon the third confirmation, the purchase is canceled, and the amount of money for the canceled purchase is refunded and added back to the sum of money recorded in the card. Then, the telephone line is disconnected, and the card is ejected from the communication terminal. The purchase cancel mode is now finished. If the confirmation key is not pushed a third time in the predetermined period of time, then the host computer determines that the purchase cancel mode is to be canceled, erases the data entered in the purchase cancel mode, keeps the previous purchase as it is, does not produce any balance information, and disconnects the telephone line, whereupon the communication terminal discharges the card.

Since the name and address of the user are recorded in the prepared card when it is purchased by the user, even if the card is used by an unauthorized person to buy an article, the purchased article will be delivered to the purchaser of the card, and hence the unauthorized person gains no advantage.

A communication system according to a third embodiment of the present invention, which is used as a system for purchasing airline tickets, will be described below.

According to this communication system, a user buys a prepaid card equivalent to a certain sum of money for purchasing airline tickets, at a suitable outlet. At this time, the user registers his name. These data are stored in the card. These data can be written only once and cannot be altered. The card contains stored data representing its ID number, telephone numbers that can automatically be dialed, the sum of money, and other data. The prepaid card stores two telephone numbers which can automatically be dialed, one for the purchase of airline tickets and the other for receiving various airline data services. These telephone numbers can selectively be reached on-line by inserting the card one way or the other way around.

In use, the prepaid card thus purchased is inserted into a communication terminal for the purchases of airline tickets. The communication terminal now starts to operate, and displays the remaining sum of money on the display screen. At this time, the communication terminal is not yet connected to the telephone line. Thereafter, based on information contained in an airline timetable, the user enters data representing the classification number of the desired air route, the flight data, the flight number, and the number of airline tickets desired, through the ten-key pad of the communication terminal. At this time, three desired flight numbers are entered, and a return ticket may also be purchased if a round trip is desired. The numerals indicative of these data are displayed on the display screen. If some of the data are to be corrected, the correction key is pushed to erase the data, and then new data may be entered.

After the necessary data have been entered, the user pushes the confirmation key (first confirmation), and the data are printed by the printer. If it is found that the printed data are the same as the entered data, then the user pushes the confirmation key again (second confirmation). The communication terminal is now connected to the host computer through the telephone line by the automatic dialing unit.

Then, the data entered in the communication terminal, and the data stored in the card, such as the name of the purchaser, the ID number of the card, and the remaining sum of money, are transmitted to the host computer. The host computer sends back the received data, balance information, and flight number that can be booked to the communication terminal, in which they are displayed on the display screen or printed by the printer.

The host computer generates a data file based on the ID number of the card, and stores the data about the name and other related data in the file.

The user then checks the entered data and the data, balance information, and fight number that can be booked which are received from the host computer, and, if there is no problem, presses the confirmation key within a predetermined period of time (third confirmation). Upon the third confirmation, the reservation and purchase are established, and the amount of money for the purchase is subtracted from the remaining sum of money recorded in the card. The seat reservation and the purchase of the airline ticket are now completed.

The flight reservation and the ticket purchase can be canceled as follows: The prepaid card is inserted into the communication terminal. After the communication terminal starts to operate, the correction key is pushed for the system to enter a reservation cancel mode. The classification number of the air route for the previously booked flight, the date of the flight, and the flight number are entered through the ten-key pad, and are displayed on the display screen. After the necessary data have been entered, the user pushes the confirmation key (first confirmation), and the data are printed by the printer. If it is found that the printed data are the same as the data of the previously booked flight, then the user pushes the confirmation key again (second confirmation). The communication terminal is now connected to the host computer through the telephone line by the automatic dialing unit. Then, the data entered in the communication terminal, and the data recorded in the card, such as the name of the purchaser, the ID number of the card, and the remaining sum of money, are transmitted to the host computer. The host computer checks whether there has been a reservation corresponding to the cancelled flight based on the transmitted ID number. If this corresponding reservation exists, then the host computer sends back the received data, balance information, and cancel information, i.e., the canceled flight number, to the communication terminal, in which they are displayed on the display screen or printed by the printer.

If there is no corresponding reservation found, then a message indicative of no corresponding reservation is displayed or printed on the communication terminal, the telephone line is disconnected, the card is ejected, and the communication terminal is shut off.

The user then checks the entered data and the data, balance information, and the canceled flight which are received from the host computer, and, if there is no problem, presses the confirmation key within a predetermined period of time (third confirmation). Upon the third confirmation, the reservation is canceled, and the amount of money for the canceled reservation is refunded and added back to the sum of money recorded in the card. The cancellation of the reservation and the refunding of the purchase are now brought to an end.

When boarding the booked flight, the passenger inserts the card into a boarding ticket issuing machine connected to the host computer, and enters the name and the age of the passenger. The boarding ticket issuing machine reads the ID number of the card, and sends the ID number and the entered data to the host computer. The host computer searches for the booked flight based on the ID number of the card, and instructs the boarding ticket issuing machine to issue a boarding ticket if the booked flight is found. The passenger now boards the booked flight with the issued boarding ticket. If the passenger does not bring the card with him, then the gives the name of the card purchaser, the booked flight number, and the name and age of the passenger. Then, the name of the card purchaser and the booked flight are checked, and a boarding ticket is issued to the passenger. The name and age of the passenger, which are entered at this time, are used as data for the passenger list.

When the prepaid card is inserted the other way around into the communication terminal for airline data services, various data services such as data as to the booked condition of a flight, data as to flights that are booked with the card, and other various aviation data. Upon insertion of the card, the communication terminal starts operating in the service mode, and the user enters a desired service item through the ten-key pad. For example, if the user wants to know the booked condition of a certain flight, then the user enters data relative to the corresponding air route and date and time. These entered data are displayed on the display screen at the same time of the entrance. If some of the data are to be corrected, the correction key is pushed to erase the data, and then new data may be entered. After the necessary data have been entered, the user pushes the confirmation key, enabling the automatic dialing unit to connect the communication terminal to the host computer through the telephone line. Thereafter, the requested service item is transmitted to the host computer, which then transmits information regarding the requested service item, i.e., the booked condition of the flight, to the communication terminal where it is displayed or printed.

While the present invention has been described mainly with reference to the placing of horse race bets tickets, articles of merchandise, and airline tickets, the communication system of the present invention is also applicable to the purchase of bets for similar races such as bicycle races, speedboat races or motorcycle races, and the purchase of tickets such as admission tickets, railroad and bus tickets or ship boarding tickets.

## Claims

1. A communication system employing a prepaid card comprising:
a prepaid card having a storage area for storing various data and inherent identification data including at least unalterable data;
a communication terminal for reading data from and writing data in said prepaid card, entering necessary data after having read data from the prepaid card, and sending the read data and/or necessary data through a communication line in response to a communication starting command; and
a host computer for performing necessary procedures in response to the communication from said communication terminal.

2. A communication system according to claim 1, wherein said communication terminal has means for altering at least a portion of the data stored in said storage area only in response to a command transmitted from said host computer over said communication line.

3. A communication system according to claim 1 or 2, wherein said host computer has means for storing the identification data of said prepaid card and generating a file for necessary procedures based on said identification data.

4. A communication system according to claim 3, wherein said host computer has means for storing the identification data of said prepaid card when said prepaid card is used for the first time in combination with the communication terminal, and generating a file for necessary procedures based on said identification data.

5. A communication system according to claim 3, wherein said host computer has means for storing the identification data of said prepaid card in advance of use of said prepaid card in combination with the communication terminal, and generating a file for necessary procedures based on said identification data.

6. A communication system according to any one of claims 1 through 5, wherein said host computer has only a signal modem for use as a communication modem for exchanging at least a portion of the data.

7. A communication system according to any one of claims 1 through 6, wherein said communication terminal has only a signal modem for use as an communication modem for exchanging at least a portion of the data.

8. A communication system according to any one of claims 1 through 7, wherein said communication terminal has a display unit for displaying the entered data and/or a printer for printing the entered data.

9. A communication system according to any one of claims 1 through 8, wherein said communication terminal has a ten-key pad for entering the data.

10. A communication system according to any one of claims 1 through 9, wherein said communication line comprises a telephone line.

11. A communication system according to any one of claims 1 through 10, further including a telephone, said communication terminal being connected to said telephone.

12. A communication system according to claims 1 through 11, wherein an unalterable telephone number is stored in said prepaid card, said communication terminal having automatic dialing means for automatically dialing said unalterable telephone number.

13. A communication system according to claim 12, wherein at least two unalterable telephone numbers are stored in said prepaid card.

14. A communication system according to claim 13, wherein automatically dialing said at least two unalterable telephone numbers is done depending on the orientation of said prepaid card at the time said prepaid card is inserted into said communication terminal.

15. A communication system according to any one of claims 1 through 14, further including another host computer, at least two host computers being accessible by said communication terminal in combination with said prepaid card.

16. A communication system according to any one of claims 1 through 15, further including an automatic refunding machine, said host computer being connected to said automatic refunding machine, said automatic refunding machine having means for reading the data from said prepaid card and means for transmitting the identification data from said automatic refunding machine to said host computer, said host computer having means for checking the data of said prepaid card which have been entered from said communication terminal, based on said identification data from said automatic refunding machine, for calculating an amount of money to be refunded, and for instructing said automatic refunding machine to refund said amount of money.

FIG.1

USER

CARD SELLER

PREPAID CARD ──────────┐ 1

CARD DATA ────────┐
• ID NO.
• TELEPHONE NO.
• SUM OF MONEY
└──────────────────┘
2

COMMUNICATION TERMINAL

┌─ REMAINING SUM OF MONEY DISPLAYED
├─ DATA ENTERED BY USER VIA TEN-KEY PAD
│  DATA AND TIME OF RACE, RACE NO. THE
│  NUMBER OF BETS
└─ DATA DISPLAYED → CONFIRMED BY CONFIRMATION
   KEY (I) → DATA DISPLAYED (PRINTOUT) ──────┐
   └─→ CONFIRMED BY CONFIRMATION KEY (2) ──────┘

OFF-LINE

• AUTOMATICALLY DIALED
• COMMUNICATION LINE CONNECTED
• HIGH-SPEED DATA COMMUNICATION
  (COMMUNICATION MODEM)

3

HOST COMPUTER

• FILE CORRESPONDING TO CARD ID NO. GENERATED
• HIGH-SPEED DATA COMMUNICATION
  (COMMUNICATION MODEM)

2

COMMUNICATION TERMINAL

└─ DATA RECEIVED BY HOST COMPUTER, BALANCE
   INFORMATION DISPLAYED → CONFIRMED BY
   CONFIRMATION KEY (3) ──────┐

3

HIGH-SPEED DATA COMMUNICATION
(COMMUNICATION MODEM)

HOST COMPUTER

• PURCHASE ESTABLISHED
• BALANCE INFORMATION AND CARD DATA
  INSTRUCTED TO BE REWRITTEN
• HIGH-SPEED DATA COMMUNICATION
  (COMMUNICATION MODEM)

ON-LINE

2

COMMUNICATION TERMINAL

• CARD DATA REWRITTEN
• CARD EJECTED

PURCHASE ENDED

FIG.2

# F I G. 3

PREPAID CARD    —1

┌─CARD DATA─ ─ ─ ┐
│  • ID NO.                    │
│  • TELEPHONE NO.  │
│  • SUM OF MONEY    │
└─ ─ ─ ─ ─ ─ ─ ┘

REFUNDING MACHINE    —4

• CARD DATA READ

• COMMUNICATION LINE CONNECTED

• HIGH-SPEED DATA COMMUNICATION

HOST COMPUTER    —3

• SEARCH ID NO. FILE

• DATA PROCESSED, REFUND CALCULATED

• REFUNDING INSTRUCTED

REFUNDING MACHINE    —4

• CALCULATED AMOUNT REFUNDED

• CARD EJECTED

REFUNDING ENDED